# EUROPEAN PATENT APPLICATION

(11) **EP 1 762 325 A1**
(43) Date of publication of application: **14.03.2007**
(21) Application number: 06017723.5
(22) Date of filing: 25.08.2006
(51) Int. Cl.: B23K 9/20, B23P 19/00

(54) **Fastening tool and method for fastening an element to a component**

(30) Priority: 09.09.2005 DE 102005044362
(71) Applicant: Newfrey LLC, Newark, Delaware 19711 (US)
(72) Inventor: Schneider, Michael, 35633 Lahnau (DE); Friedrich, Arne, 35435 Wettenberg (DE)
(74) Representative: Steil, Christian

(57) **Abstract**

Disclosed is a fastening tool (10) for fastening elements (18) to components, having a holding device (16) for holding an element (18), wherein the holding device (16) can be moved along a fastening direction (22) relative to a fastening tool housing (12) by means of a fastening drive device (20) in order to fasten the held element (18) to a component. In this tool, restraining means (32) are provided in order to hold the holding device (16) in a defined position during a movement of the fastening tool housing (12) (Fig. 1).

## Description

The present invention concerns a fastening tool for fastening elements to components, having a holding device for holding an element, wherein the holding device can be moved along a fastening direction relative to a fastening tool housing by means of a fastening drive device in order to fasten the held element to a component.

A fastening tool of this nature is known from DE 102 23 147 A1.

In the present context, the term "fastening" is intended to refer to all methods for attaching elements to components, in particular attaching metal elements to metal components, for example by adhesive bonding, by forming, such as riveting, or by the union of materials, such as welding, including short-cycle arc welding.

Short-cycle arc welding is frequently referred to as stud welding, even though studs are not the only article welded in this manner.

Stud welding is used primarily, but not exclusively, in automotive production. In this context, metal elements, such as metal studs with and without threads, eyes, nuts, etc., are welded onto the sheet metal of the vehicle body. The metal elements then serve as anchors or mounting elements, for example for attaching passenger compartment fittings, lines, wiring and the like, to the body metal.

In prior art fastening tools, the fastening drive device is designed either as a linear electric motor or as a combination of a solenoid and a spring.

The holding device is normally composed of a one-piece chuck that is capable of elastically expanding in the radial direction.

The elements are generally welding studs with a head somewhat larger in diameter than the stud shank. In the prior art system, the studs are fed by means of compressed air through suitable feeder tubes to the fastening tool. In this context, the studs are conveyed "head first" into the chuck from behind. In this process, the stud usually strikes the chuck from inside, but without passing through it. A coaxially arranged loading pin is then actuated in order to press the stud thus fed forward through the chuck from behind. The chuck is elastically expanded radially when the head passes through. Then the chuck elastically snaps closed around the shank of the stud and holds it in the position determined by the stroke of the loading pin.

A fastening tool of this nature can be attached to a robot, for example.

The fastening tool known from the aforementioned DE 102 23 147 A1 operates according to a different principle with respect to the feeding of studs. In this design, the fastening tool is attached to a carrier so as to be rotatable about an axis of rotation. Studs are conveyed by a feed mechanism to a transfer station on the carrier. The transfer station is arranged such that the fastening tool can rotate toward the transfer station to obtain a stud held ready there. Here, the stud is held ready in the "shank first" position, and its shank is gripped by a holding device of the fastening tool.

For a subsequent fastening operation, the fastening tool is rotated about the axis of rotation to a welding position.

This is followed by a fastening operation (stud welding operation). Then the fastening tool is again rotated toward the transfer station, where another stud has been made ready in the meantime. The additional stud is accepted, and another fastening operation takes place.

In order to achieve fast cycle times in this type of fastening system, it is desirable to rotate the fastening tool quickly from a welding position to the transfer station and back again.

The centrifugal forces arising in this regard can be so great that the holding device moves with respect to the fastening tool housing.

This can be prevented by reducing the rotational velocity of the fastening tool. However, this has an adverse effect on the cycle times.

The aforementioned fastening system, in which the studs are fed through a chuck from behind, can also suffer this problem. However, when the fastening tool in such a system is moved by means of a robot, generally no movements directly in the fastening direction take place, such as is the case when a fastening tool is rotated about an axis of rotation perpendicular to the fastening direction.

Accordingly, the object of the present invention is to specify a fastening tool that can achieve improved cycle times.

This object is attained in the fastening tool mentioned above in that restraining means are provided in order to hold the holding device in a defined position during motion of the fastening tool housing.

The above object is further attained by a method for fastening an element to a component, in particular for stud welding, wherein an element to be fastened is accepted by a holding device of a fastening tool, said holding device being movable relative to a housing of the fastening tool, wherein the fastening tool is subsequently moved to a fastening position, wherein the holding device is held in a defined position relative to the housing by restraining means during this movement.

In this regard, the restraining means can be implemented in that the fastening drive device is driven during a motion of the fastening tool housing in order to hold the holding device in the defined position. However, this requires the fastening drive device to continuously control the position of the holding device relative to the fastening tool housing, especially during rotary motions of a fastening tool. This leads to high power consumption, and consequently the generation of a large amount of heat.

In order to avoid this, the restraining means are preferably composed of separate means, for example of mechanical solutions such as a ball catch.

In this solution, the holding device is held in the defined position by means of the ball catch. In order to move the holding device out of this position, the fastening drive device must then apply a somewhat increased force to release the locking.

It is also generally possible to provide clamping means, for example a clamping cylinder such as a pneumatic clamping cylinder. However, this frequently necessitates additional energy sources (pneumatic source).

It is therefore of particular advantage for the restraining means to have a magnet attached to the fastening tool housing and a magnetically soft armature component attached to the holding device, and for the armature component to rest against the magnet in the defined position.

Magnets are comparatively economical components and can be integrated in a fastening tool by relatively simple design means. Moreover, they usually are low-maintenance.

It is of particular advantage for the magnet to be a permanent magnet.

In this case, no separate energy source is needed for the magnet. Furthermore, a permanent magnet has a long service life and requires no maintenance.

It is especially preferred for the permanent magnet to be made with NdFeB.

A permanent magnet made with or of such a material can develop relatively high holding forces at a relatively small overall volume.

In addition, it is advantageous that this material only develops the relatively high holding forces when the air gap between the permanent magnet and the armature component is very small, preferably approaching zero. Because even with a small air gap, the forces of magnetic attraction of a permanent magnet, in particular a permanent magnet made of NdFeB, decrease sharply.

Accordingly, the fastening drive device need only exert an increased force for a relatively brief period of time in order to move the holding device out of the defined position during a fastening operation.

According to another preferred embodiment, a space between the magnet and the armature component is encapsulated from the environment.

Since the inventive fastening tools frequently are used in comparatively rough environments, there is a risk that foreign particles will get into the space.

As a result, the foreign particles can prevent the armature component from contacting the magnet in the defined position, or prevent the air gap from approaching zero. In turn, this can have the consequence that the magnet cannot exert the necessary holding force.

Encapsulating this space can achieve the result that foreign particles cannot get into said space during operation. Consequently, a uniformly high holding force can be achieved even over a fairly long period of operation.

It is of particular advantage for the armature component to be part of a piston, in particular to constitute a piston, which is guided in an encapsulated cylinder housing.

In this way, the encapsulation of the magnetic restraining means can be accomplished with relatively few components.

According to another preferred embodiment, the magnet constitutes a part of the cylinder housing.

The number of components can be reduced in this embodiment, as well.

Moreover, this embodiment makes possible by simple design means that the armature component contacts or rests against the magnet in the defined position.

It is further preferred for the space between the magnet and the armature component to be encapsulated from the environment by means of at least one filter.

In this embodiment, a fluid medium such as air can escape through the filter to the environment when the armature component moves toward the magnet. As the armature component moves away from the magnet, the fluid medium can enter the space through the filter. Accordingly, the medium need not be compressed during actuating motions by the fastening drive device. As a result of the filter, foreign particles are prevented from entering the space.

According to another preferred embodiment, the magnet is arranged in a housing of the fastening tool a distance apart from the fastening drive device.

This embodiment advantageously makes it possible that the restraining magnet does not disrupt proper operation of the fastening drive device, which often operates on the basis of magnetic forces, such as a solenoid or a linear electric motor, for instance.

On the whole, it is additionally advantageous for the armature component to be attached to the holding device by means of a connecting element that essentially cannot be magnetized.

In this embodiment, the connecting element functions as a "magnetic insulator" between the magnetic restraining means and the fastening drive means, which generally are associated directly with the holding device.

Of course, the features mentioned above and those to be explained below need not be used only in the specific combinations given, but may also be used in other combinations or alone without departing from the scope of the present invention.

Example embodiments of the invention are shown in the drawings and are explained in detail in the description below. They show:
Fig. 1 a schematic representation of a fastening tool according to an embodiment of the present invention;
Fig. 2 aschematic representation of a part of a fastening tool according to another embodiment of the invention; and
Fig. 3 a cross-sectional view along line III-III from Fig. 2.

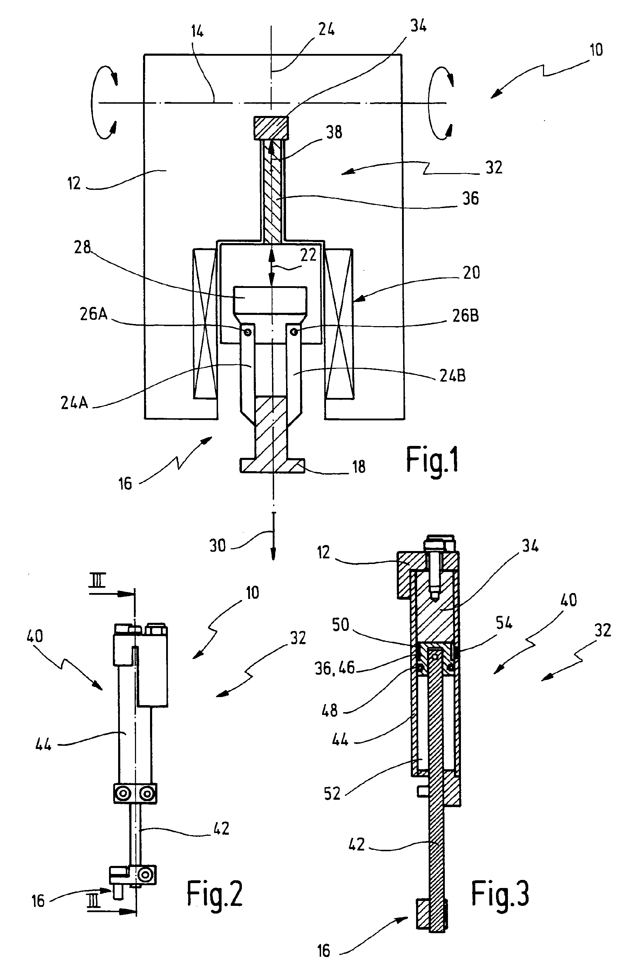

In Fig. 1, a first embodiment of an inventive fastening tool is designated 10 overall.

The fastening tool 10 has a housing 12, which is mounted such that it can rotate about an axis of rotation 14.

The fastening tool 10 here can, as a general rule, be designed as described in patent document DE 102 23 147 A1. The disclosure of said document is incorporated herein by reference.

As described therein, the fastening tool 10 can be rotated about the axis of rotation 14 by means of a rotary drive device in order to swivel the fastening tool 10 between a transfer station to receive an element 18 to be fastened and a fastening position.

Also provided on the fastening tool 10 is a holding device 16 for an element 18, such as a welding stud. The holding device 16 can be moved along an axis of fastening motion 22 by means of a drive device 20.

The axis of fastening motion 22 extends crosswise to the axis of rotation 14, and may intersect it or be skewed relative thereto.

The holding device 16 additionally has two jaws 24A, 24B, which are mounted so as to be rotatable about axes of rotation 26A, 26B. The axes of rotation 26A, 26B are oriented crosswise to the axis of fastening motion 22 and preferably also crosswise to the axis of rotation 14.

Provided on the holding device 16 is an actuator 28 for opening and closing the jaws 24A, 24B in order to hold or release an element 18.

During a rotary motion of the housing 12 of the fastening tool 10 about the axis of rotation 14, centrifugal forces 30 - which are parallel to the axis of fastening motion 22 - act on the holding device 16. In other words, the holding device 16 is pushed out of the housing 12 by the centrifugal forces 30 during a rotary motion of said housing.

A defined position of the holding device 16 relative to the housing 12 could be lost in the process.

In order to prevent this, restraining means 32 are provided in order to hold the holding device 16 in a defined position during rotary movements of the housing 12. The defined position is shown in Fig. 1 and corresponds, for example, to a fully withdrawn position in which the holding device 16 is retracted to the fullest extent into the housing 12.

In this defined position, the space occupied by the fastening tool and an element 18 held by the holding device 16 is minimized. For this reason, the housing 12 can still execute rotary operations about the axis of rotation even under conditions of limited space.

The restraining means 32 have a permanent magnet 34 that is attached to the housing 12. In addition, the restraining means 32 have a magnetically soft, which is to say magnetizable, armature component 36, which is attached to the holding device 16.

In the present case, the permanent magnet 34 is arranged in the housing 12 at a distance from the drive device 20. This is because the drive device 20 can also be a magnetically operating drive device, such as an electric solenoid or a linear electric motor.

This measure ensures that the magnetic field given off by the permanent magnet 34 does not disrupt proper operation of the drive device 20.

In the present case, the armature component 36 is embodied as an armature bar that is attached to the back end of the holding device 16, i.e. pointing toward the axis of rotation 14.

In the defined position, the free face of the armature bar 36 abuts the permanent magnet 34. The permanent magnet 34 magnetizes the armature component 36, and strong magnetic forces develop between them; in Fig. 1, these forces are shown schematically as 38.

It can be seen that these magnetic forces 38 diametrically oppose the centrifugal forces 30.

The permanent magnet 34 can be made of NdFeB, for example. A permanent magnet of this nature exerts relatively great forces on a magnetically soft armature component 36 when the air gap between them is very small, ideally approaching zero or even being zero, even when the magnet has a small overall volume.

As the air gap increases, the magnetic forces 38 decrease sharply.

Consequently, in order to move the holding device 16 out of the defined position for a fastening operation or to accept the element from a transfer station, the drive device 20 only needs to exert a high force for a relatively short distance to be able to overcome the magnetic forces 38 and release the armature component 36 from the permanent magnet 34.

As soon as a not insignificant air gap is established between them, the drive device 20 can operate essentially uninfluenced by the magnetic forces 38.

In order to encapsulate the space between the armature component 36 and the permanent magnet 34, it may be useful to seal the armature component 36 with respect to the housing 12.

In order to prevent magnetic forces from the magnetized armature component (in the defined position of the holding device 16) from acting on the drive device 20, provision can also be made to first attach a non-magnetizable rod to the rear of the holding device 16, with a magnetically soft component for contact with the permanent magnet 34 being affixed to the end of said rod.

Figs. 2 and 3 show another alternative embodiment of an inventive fastening tool 10. The additional embodiment corresponds generally to the fastening tool 10 from Fig. 1 with regard to structure and with regard to mode of operation. Accordingly, like elements are labeled with like reference numbers. Only the differences are discussed below.

In the fastening tool 10 in Figs. 2 and 3, the magnetic restraining means 32 have an encapsulated design. To this end, the restraining means 32 have a piston/cylinder arrangement 40, wherein a piston rod 42 - which preferably cannot be magnetized - is attached to the holding device 16. The piston/cylinder arrangement 40 also has a cylinder housing 44, in which a piston 46 is supported so as to be movable. The piston 46 is sealed in the cylinder housing 44 by means of a seal 48, and divides the interior volume of the cylinder housing 44 into a first cylinder chamber 50 and a second cylinder chamber 52.

In the present case, a face of the cylinder housing 44 is composed of a permanent magnet 34. In the defined position shown in Fig. 3, the piston 46 rests directly against the permanent magnet 34. In this context, at least part of the piston 46 is designed as a magnetically soft armature component 36.

In the defined position of the holding device 16 shown, the piston 46 rests against the permanent magnet 34. The first cylinder chamber 50 is minimized here.

The first cylinder chamber 50 additionally communicates with the environment through a filter 54, which can be affixed to the cylinder housing 44 or in the cylinder housing 44, for example.

As long as the drive device 20 (not shown in Figs. 2 and 3) is moving the holding device 16 out of the defined position shown, air is drawn through the filter 54 into the first cylinder chamber 50, and the second cylinder chamber 52 is reduced. During the process, the filter 54 filters foreign particles out of the air, thus preventing these particles from getting between the piston 46 and permanent magnet 34.

A corresponding solution may be provided for the second cylinder chamber 52, even though foreign particles in the second cylinder chamber 52 are not as critical. In this case, the second cylinder chamber 52 can also communicate directly with the environment through a vent hole (not shown).

To carry out the inventive method, the housing 12 is first rotated into a transfer position (not shown), where a stud 18 is ready for transfer. During the rotation, the holding device 16 is in the defined position and is held by the magnetic forces 38. Consequently, the rotation can take place at a high speed. Because of the restraining means 32, the high centrifugal forces 30 arising in the process do not induce the holding device 16 to move out of the housing 12.

In the transfer position, the holding device 16 is then extended out of the housing 12 by means of the drive device 20, with the jaws 24A, 24B opened.

Next the jaws 24A, 24B are closed, and a readied element (stud) is gripped.

Then the holding device 16 is again moved into the defined position shown in Fig. 1 by means of the drive device 20. Subsequently, or even shortly beforehand, the housing 12 is again rotated, this time into a fastening position. During this rotation, the holding device 16 is again held by the magnetic restraining means 32. This rotation can also take place at a high speed.

In the fastening position, a stud welding process or other fastening operation then takes place. Here, the holding device 16 is moved by the drive device 20 along the fastening axis 22 in order to fasten (for example by stud welding, adhesive bonding, riveting, or the like) the element 18 to a component (not shown), such as a car body panel or similar item.

Upon completion of the fastening process, the jaws 24A, 24B are opened or released, and the housing 12 can again be rotated toward the transfer position. At the start of this rotation or beforehand, the holding device 16 is again retracted into the defined position shown in Fig. 1.

Then the next readied element is gripped, and the process is repeated.

## Claims

1. Fastening tool (10) for fastening elements (18) to components, having a holding device (16) for holding an element (18), wherein the holding device (16) can be moved along a fastening direction (22) relative to a fastening tool housing (12) by means of a fastening drive device (20) in order to fasten the held element (18) to a component, **characterized by** restraining means (32) in order to hold the holding device (16) in a defined position during a movement of the fastening tool housing (12).

2. Fastening tool according to Claim 1, **characterized in that** the restraining means (32) have a magnet (34) attached to the fastening tool housing (12), and a magnetically soft armature component (36) attached to the holding device (16), and **in that** the armature component (36) rests against the magnet (34) in the defined position.

3. Fastening tool according to Claim 2, **characterized in that** the magnet is a permanent magnet (34).

4. Fastening tool according to Claim 3, **characterized in that** the permanent magnet (34) is made with NdFeB.

5. Fastening tool according to one of Claims 2-4, **characterized in that** a space (50) between the magnet (34) and the armature component (36) is encapsulated from the environment.

6. Fastening tool according to Claim 5, **characterized in that** the armature component (36) is part of a piston (46), which is guided in an encapsulated cylinder housing (44).

7. Fastening tool according to Claim 6, **characterized in that** the magnet (34) constitutes a part of the cylinder housing (44).

8. Fastening tool according to one of Claims 5 - 7, **characterized in that** the space (50) between the magnet (34) and the armature component (36) is encapsulated from the environment by means of at least one filter (54).

9. Fastening tool according to one of Claims 2-8, **characterized in that** the magnet (34) is arranged in a housing (12) of the fastening tool (10) a distance apart from the fastening drive device (20).

10. Fastening tool according to one of Claims 2 - 9, **characterized in that** the armature component (36) is attached to the holding device (16) by means of a connecting element (42) that essentially cannot be magnetized.

11. Method for fastening an element (18) to a component, in particular for stud welding, wherein an element to be fastened is accepted by a holding device (16) of a fastening tool (10), said holding device being movable relative to a housing (12) of the fastening tool, wherein the fastening tool is subsequently moved to a fastening position, wherein the holding device (16) is held in a defined position relative to the housing (12) by restraining (32) means during this movement.
